# EUROPÄISCHE PATENTSCHRIFT

(11) **EP 0 719 358 B1**
(45) Veröffentlichungstag und Bekanntmachung des Hinweises auf die Patenterteilung: **12.03.1997**
(21) Anmeldenummer: 94928314.7
(22) Anmeldetag: 05.09.1994
(51) Int. Cl.: D21C 5/02

(54) **VORRICHTUNG ZUM BETRIEB EINER ANLAGE ZUR ERZEUGUNG VON DEINKTEM ZELLSTOFF MIT IN FORM VON NEURONALEN NETZEN AUFGEBAUTEN ZUSTANDSANALYSATOREN FÜR DIE ALTPAPIERSUSPENSION**
DEVICE FOR CONTROLLING A DEINKED CELLULOSE PRODUCTION PLANT WITH STATE ANALYSERS CONSTITUTED OF NEURAL NETWORKS FOR THE WASTE PAPER SUSPENSION
DISPOSITIF D'EXPLOITATION D'UNE INSTALLATION DE PRODUCTION DE PATE DE CELLULOSE DESENCREE AVEC DES ANALYSEURS DE L'ETAT DE LA SUSPENSION DE VIEUX PAPIERS CONSTITUES DE RESEAUX NEURAUX

(30) Priorität: 16.09.1993 EP 93114965
(43) Veröffentlichungstag der Anmeldung: 03.07.1996
(73) Patentinhaber: SIEMENS AKTIENGESELLSCHAFT, 80333 München (DE)
(72) Erfinder: FURUMOTO, Herbert, D-91052 Erlangen (DE)
(86) Internationale Anmeldenummer: EP9402954
(87) Internationale Veröffentlichungsnummer: WO9508019

(56) Entgegenhaltungen:
- DATABASE PAPERCHEM THE INSTITUTE OF PAPER SCIENCE AND TECHNOLOGY, ATLANTA, GA, US AN 63-07946, NAITO, T. 'Overview of the Artificial Neural System and Possibility of Its Use in the Paper Industry'
- PROCESS CONTROL CONF. (NASHVILLE) PROC.: 201-206 (TAPPI;MARCH 21-25, 1993). [ENGL.], BEAVERSTOCK, M. C. ET AL 'Pulp and Paper Applications of Neural Networks'
- AM. PAPERMAKER 56, NO. 3: 24-26 (MARCH 1993). [ENGL.], WALKER, R. 'Artificial Intelligence [Papermaking Applications]'
- PAPIER AUS OSTERREICH NO. 4: 35-36 (OCT. 1984). [GER.], PAPIER AUS OSTERREICH. 'AEG Prozessleitsystem in der Papierindustrie'
- DATABASE PAPERCHEM THE INSTITUTE OF PAPER SCIENCE AND TECHNOLOGY, ATLANTA, GA, US AN 63-05322, 'Controlling the Future Pulp Mill'

## Beschreibung

Bei der Herstellung von deinktem Zellstoff unter Verwendung eines möglichst großen Anteiles von Altpapier besteht ein Problem darin, daß die Qualität des in eine Vorrichtung zur Altpapieraufbereitung in der Anlage zur Erzeugung von deinktem Zellstoff, d.h. von zur Erzeugung von Recyclingpapier vorgesehenen Zellstoff, eingebrachten Altpapieres stark schwankt. Abhängig von der jeweiligen Mischung des Altpapieres können darin stark veränderliche Anteile z.B. an bunten Illustriertenpapieren, grauen Zeitungspapieren, weißen Papieren, verschmutzten Papieren, Altbüchern z.B. mit Kleberücken, wie z.B. Telefonbüchern, Kartonagen, Verpackungen, beschichteten Papieren, Verschmutzungen aller Art und vieles mehr enthalten sein. Zumindest die Betriebsmittel der Vorrichtung zur Altpapieraufbereitung müssen somit abhängig vom Zustand einer jeweils eingebrachten Charge an Altpapieren geeignet geregelt oder gesteuert werden, um eine zur Herstellung von deinktem Zellstoff geeignete Altpapiersuspension mit annähernd konstanten Qualitätskennwerten zu erhalten.

Für die Prozessführung der Altpapieraufbereitung, welche sich am Anfang der Anlage zur Erzeugung von deinktem Zellstoff befindet, ist es u.a. wesentlich, die Zugabe von Deinking- und gegebenenfalls von Dispergierchemikalien abhängig vom aktuellen Zustand des zugeführten Altpapieres möglichst genau zu dosieren. Ferner sollten auch die zur Homogenisierung und Sortierung der Zellulosefasern in der Suspension dienenden Betriebsmittel der Altpapieraufbereitungsanlage optimal gesteuert bzw. geregelt werden. Voraussetzung für eine exakte Prozeßführung der Altpapieraufbereitungsanlage ist aber eine möglichst genaue und schnelle meßtechnische Erfassung von ausgewählten Kennwerten der durch Auflösung von Altpapier unterschiedlichster Qualität und Art gewonnenen Altpapiersuspension am Eingang der Altpapieraufbereitungsanlage.

Bislang wurde der Zustand der Altpapiersuspension allein durch die Messung von physikalischen Kennwerten erfaßt. Diese Größen haben aber den Nachteil, daß damit der Zustand der Altpapiersuspension im Hinblick auf die möglichen, der Aufbereitungsanlage zugeführten Altpapiersorten und deren Qualitätsmerkmalen nur ungenau wiedergegeben werden kann. Eine Steuerung von Betriebsmitteln der Altpapieraufbereitungsanlage mit Hilfe dieser Größen ist somit nur ungenau möglich.

Demgegenüber liegt der Erfindung die Aufgabe zugrunde, eine Betriebsvorrichtung anzugeben, welche eine möglichst optimale Prozeßführung einer Anlage zur Erzeugung von deinktem Zellstoff ermöglicht.

Die Aufgabe wird gelöst mit der im Anspruch 1 angegebenen Vorrichtung. Vorteilhafte weitere Ausführungsformen der Erfindung sind in den Unteransprüchen angegeben.

Die erfindungsgemäße Vorrichtung enthält mindestens eine Meßeinrichtung zur Erfassung spektraler und/oder physikalischer Kennwerte einer der Altpapieraufbereitung zugeführten Altpapiersuspension. Ferner sind für die Beeinflussung zumindest von Betriebsmitteln der Altpapieraufbereitungsanlage ausgewählte Regel- oder Steuereinrichtungen vorhanden.

Erfindungsgemäß ist mindestens ein Zustandsanalysator vorhanden, welcher in Form eines einzigen oder mehrerer paralleler neuronaler Netze ausgeführt ist. Diesem werden die von der Meßeinrichtung erfaßten Kennwerte der Altpapiersuspension als Eingangsgrößen zugeführt. Der mindestens eine Zustandsanalysator ermittelt daraus Steuergrößen, die zumindest zur Prozeßführung an Regel- oder Steuereinrichtungen für Betriebsmittel der Altpapieraufbereitungsanlage, und gegebenenfalls zusätzlich an Regel- oder Steuereinrichtungen einer sich anschließenden Entwässerungsmaschine zur Herstellung von deinktem Zellstoff oder an Regel- oder Steuereinrichtungen von mindestens einer sich anschließende Papiermaschine in einer Anlage zur Erzeugung von Recyclingpapier, welche den deinkten Zellstoff verarbeitet, ausgegeben werden.

Zum Aufbau des Zustandsanalysators können bekannte, z.B. als Softwarebausteine für Prozeßrechenanlagen erhältliche neuronale Netze eingesetzt werden. Die Einstellung des neuronalen Netzes erfolgt in bekannter Weise durch sogenanntes "trainieren" unter Zuhilfenahme einer möglichst großen Anzahl von Meßwerten, welche durch manuelle Laboranalyse der Altpapiersuspension gewonnen werden.

Gemäß einer bevorzugten Ausführung der Erfindung werden von dem mindestens einen Zustandsanalysator als Steuergrößen ermittelt entweder das Verhältnis von bunten Papieren zu weißen Papieren und/oder das Verhältnis von Illustriertenpapieren zu Zeitungspapieren in der zur Altpapiersuspension verarbeiteten Menge an Altpapier. Es hat sich gezeigt, daß diese Verhältnisse besonders geeignet sind für die Beschreibung des aktuellen Zustandes der Altpapiersuspension, und werden erfindungsgemäß alternativ oder auch gemeinsam als bevorzugte Steuergrößen für die Prozeßführung eingesetzt. Sie werden u.a. verwendet für die Prozeßführung von Vorrichtungen zur Zudosierung von sogenannten Deinkingchemikalien in die Altpapiersuspension. Hiermit werden Druckfarben herausgelöst, welche über das Altpapier in die Altpapiersuspension eingeschleust wurden und bei Recyclingpapier zu einem unzulässig starken Grauschleier führen würden. Diese können anschließend ausgewaschen werden.

Bei einer weiteren Ausführungsform der Erfindung werden von dem gemeinsamen neuronalen Netz bzw. von den mehreren parallelen neuronalen Netzen im Zustandsanalysator Werte für die mittlere Faserlänge und/oder den Ascheanteil in der Altpapiersuspension zur Verfügung gestellt. Diese können als weitere Steuergrößen insbesondere für die Führung der zur Fasersortierung und der zur Aussonderung von unbrauchbaren Abfallbestandteilen aus der Altpapiersuspension dienenden Betriebsmitteln der Aufbereitunganlage dienen.

Bei einer weiteren Ausführung der Erfindung können von dem gemeinsamen bzw. den mehreren parallelen neuronalen Netzen zusätzlich Zählwerte für den Anteil an Schmutz und/oder für den Anteil an klebenden Verunreinigungen in der Altpapiersuspension bereitgestellt werden. Auch diese können als Steuergrößen vorteilhaft u.a. für die zur Homogenisierung der Zellstoffasern in der Altpapiersuspension und für die zur Zudosierung von Dispergierchemikalien dienenden Betriebsmittel der Aufbereitungsanlage eingesetzt werden.

Vorteilhaft werden als spektrale Kennwerte die bei einer Bestrahlung mit ausgewählten Wellenlängenbereichen des sichtbaren und/oder infraroten Lichtes von der Altpapiersuspension reflektierten und/oder transmittierten Intensitäten dieser Wellenlängenbereiche erfaßt, und dem mindestens einen Zustandsanalysator als Eingangsgrößen zugeführt. Bei einer weiteren Ausführungsform der Erfindung werden für das sichtbare Licht Wellenlängenbereiche ausgewählt, welche zum blauen, roten und/oder grünen Lichtanteil gehören, und es werden die bei Bestrahlung mit Licht aus diesen Wellenlängenbereichen von der Altpapiersuspension reflektierten und/oder transmittierten Intensitäten als spektrale Kennwerte gemessen. Vorteilhaft können zusätzlich bei einer Bestrahlung mit Licht aus dem infraroten Wellenlängenbereich auch die von der Altpapiersuspension reflektierten und/oder transmittierten Intensitäten im Nahbereich und/oder im Fernbereich als spektrale Kennwerte meßtechnisch erfaßt werden.

Für diese Art der Messung wird der Strom der Altpapiersuspension mit ausgewählten Wellenlängen des sichtbaren und gegebenenfalls zusätzlich des infraroten Lichtes im sogenannten Auflicht- bzw. Durchlichtverfahren beleuchtet. Hierzu eignen sich z.B. sogenannte " Weißemeßgeräte ". Diese sind mit Leuchtdioden ausgerüstet, welche Licht mit unterschiedlichen Wellenlängen emittieren. Dabei können Leuchtdioden für sichtbares Licht im blauen, roten und grünen Wellenlängenbereich, und Leuchtdioden für unsichtbares Licht im infraroten Wellenlängenbereich vorhanden sein. Die nach Reflektion am Stoffstrom der Altpapiersuspension bzw. nach Durchtritt durch den Stoffstrom auftretenden Intensitäten dieser charakteristischen Spektralfarben können z.B. mit Hilfe eines Fotospektrometers als Kennwerte erfaßt werden. Vorteilhaft können zusätzlich als physikalische Kennwerte bevorzugt die Konsistenz und/oder die Temperatur der Altpapiersuspension gemessen und dem mindestens einen Zustandsanalysator als Eingangsgrößen zugeführt werden.

Die von dem mindestens einen neuronalen Netz im Zustandsanalysator gebildeten Steuergrößen können einzeln, gruppenweise oder vollständig auch für die Prozeßführung von Betriebsmitteln der mindestens einen Papiermaschine in einer sich anschließenden Recyclingpapieranlage herangezogen werden. Sie werden hierzu an entsprechende Regel- oder Steuereinrichtungen der Papiermaschine ausgegeben.

Gemäß einer weiteren Ausführung der Erfindung kann mindestens eine zusätzliche Meßeinrichtung zur Erfassung spektraler und/oder physikalischer Kennwerte der Altpapiersuspension im Inneren der Altpapieraufbereitungsanlage angeordnet sein. Dieser ist mindestens ein weiterer, erfindungsgemäß wiederum in Form eines oder mehreren paralleler neuronaler Netze ausgeführter Zustandanalysator nachgeschaltet. Die hiervon bereitgestellten Steuergrößen werden zur Prozeßführung an Regel- oder Steuereinrichtungen ausgegeben, welche zu Betriebsmitteln der Altpapieraufbereitungsanlage bzw. der Papiermaschine gehören, die der zusätzlichen Meßeinrichtung und dem weiteren Zustandsanalysator in der Richtung des Prozeßablaufes nachgeordnet sind.

Diese zusätzliche Meßeinrichtung wertet somit eine Altpapiersuspension aus, welche bereits eine oder mehrere vorgelagerte Betriebsmittel der Altpapieraufbereitungsanlage durchlaufen hat. Die Altpapiersuspension hat somit bereits einige "Reinigungen" erfahren, so daß sich deren Qualität dem zur Erzeugung von deinktem Zellstoff notwendigen Zustand angenähert hat. Die Prozeßführung nachfolgender Betriebsmittel kann mit Hilfe derart aktualisierter spektraler und/oder physikalischer Kennwerte und der daraus von dem mindestens einen Zustandanalysator abgeleiteten Steuergrößen wesentlich genauer erfolgen, als wenn lediglich Kennwerte der Altpapiersuspension im Ausgangszustand am Eingang der Altpapieraufbereitung mit einer einzigen Meßeinrichtung und einem folgenden Zustandsanalsysator erfaßt werden.

Die Erfindung wird an Hand der in den nachfolgend kurz angeführten Figuren enthaltenen Ausführungsbeispielen näher erläutert. Dabei zeigt
- Fig.1 :: ein Beispiel für einen in Form eines Gesamt-Neuronalen Netzes aufgebauten Zustandsanalysator für die Altpapiersuspension,
- Fig.2a - 2d :: ein weiteres Beispiel für einen in Form von vier Teil-Neuronalen Netzen aufgebauten Zustandsanalysator für die Altpapiersuspension, und
- Fig.3 und 4 :: ein Blockschaltbild für eine beispielhafte Anlage zur Erzeugung von Recyclingpapier mit Darstellung einzelner Betriebsmittel und deren Steuerung durch Signale von Zustandsanalysatoren.

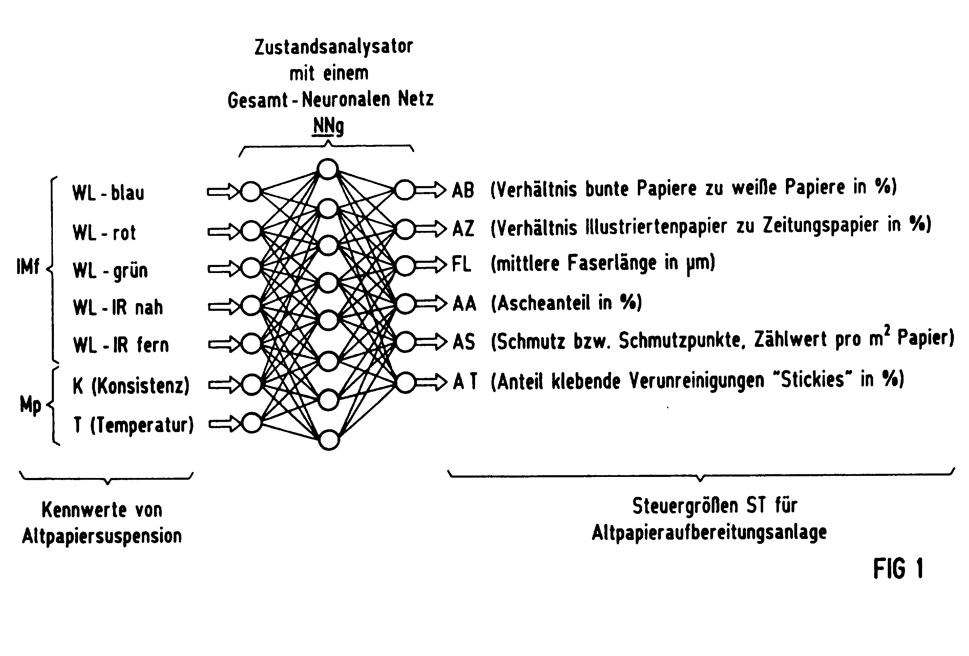

FIG 1 zeigt das Beispiel eines Zustandsanalysators für die Altpapiersuspension, welcher in Form eines einzigen, gesamt-neuronalen Netzes NNg aufgebaut ist. Diesem werden beispielhaft die von mindestens einer Meßeinrichtung erfaßten spektralen Kennwerte IMf und die physikalischen Kennwerte Mp als Eingangsgrößen zugeführt. Bei dem in FIG 1. dargestellten Beispiel sind als spektrale Kennwerte IMf die bei einer Bestrahlung der Altpapiersuspension mit ausgewählten Wellenlängenbereichen des sichtbaren und des infraroten Lichtes auftretenden Intensitäten vorgesehen. So werden als Kennwerte beispielhaft die Intensität WL-blau im Wellenlängenbereich für blaues sichtbares Licht, die Intensität WL-rot im Wellenlängenbereich für rotes sichtbares Licht und die Intensität WL-grün für sichtbares Licht aus dem grünen Wellenlängenbereich dem neuronalen Netz NNg zugeführt. Weitere spektrale Kennwerte sind die Intensität WL-IRnah für nicht sichtbares Infrarotlicht im Nahbereich und die Intensität WL-IRfern für nicht sichtbares Infrarotlicht im Fernbereich. Als physikalische Kennwerte Mp werden dem neuronalen Netz NNg die Konsistenz K und die Temperatur T der Altpapiersuspension zugeführt.

Erfindungsgemäß ermittelt das neuronale Netz NNg im Zustandsanalysator aus diesen Eingangsgrößen Steuergrößen, welche zur Prozeßführung an die Regel- oder Steuereinrichtungen von Betriebsmitteln der Altpapieraufbereitungsanlage und gegebenenfalls einer Papiermaschine in einer Recyclingpapieranlage ausgegeben werden. Bei dem in FIG 1 dargestellten Beispiel stellt das Gesamt-neuronale Netz NNg an den Ausgangsneuronen bevorzugt die folgenden Steuergrößen ST zur Verfügung:
- AB:: Verhaltnis von bunten Papieren zu weißen Papieren in der eingebrachten Altpapiermenge,
- AZ:: Verhältnis von Illustriertenpapieren zu Zeitungspapieren in der eingebrachten Altpapiermenge,
- FL:: mittlere Länge der Zellstoffasern in der Altpapiersuspension( z.B. in Mikrometer ) ,
- AA:: Anteil an Asche (z.B. Kaolin, Farbpigmente und dergleichen) in der Altpapiersuspension (in Prozent),
- AS:: Dichte von Schmutzpunkten in der Altpapiersuspension bzw. Zählwert von Schmutz bzw. Schmutzpunkten z.B. pro Quadratmeter Recyclingpapier, und
- AT:: Anteil an klebenden Verunreinigungen in der Altpapiersuspension ( sog. "Stickies", d.h. thermoplastische Bestandteile, welche z.B. von Beschichtungen und Bucheinbindungen herrühren).

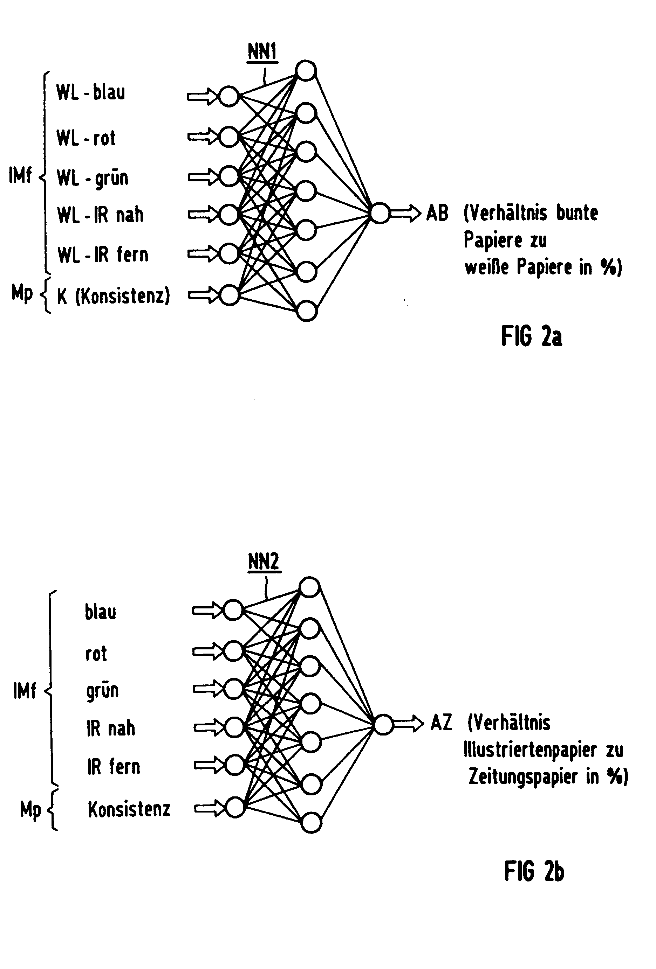

Bei anderen Ausführungsformen der Erfindung können die Größen AB und AZ, d.h. die Verhältnisse von bunten Papieren zu weißen Papieren und Illustriertenpapieren zu Zeitungspapieren in der eingebrachten Altpapiermenge auch getrennt von mehreren neuronalen Netzen zur Verfügung gestellt werden. So ist in den FIG 2a - 2d das Beispiel eines Zustandsanalysators dargestellt, welcher aus vier parallelen neuronalen Netzen NN1...NN4 besteht. Allen Netzen werden die bereits am Beispiel der FIG 1 beschriebenen spektralen Kennwerte IMf an den Eingangsneuronen zugeführt. Von den physikalischen Kennwerten Mp werden allen Teil-neuronalen Netzen NN1...NN4 die Konsistenz K zugeführt, dagegen die Temperatur T der Altpapiersuspension zusätzlich nur dem Teil-neuronalen Netz NN4.

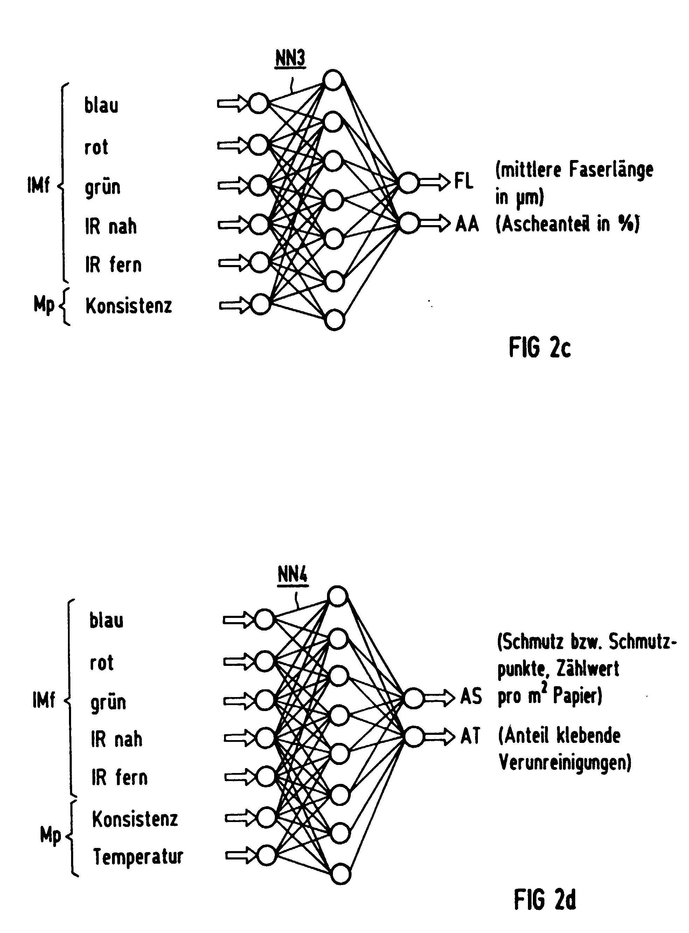

Die in den FIG 2a bzw. 2b dargestellten Teilnetze NN1 bzw. NN2 des Zustandsanalysators bilden das Verhältnis AB von bunten zu weißen Papieren bzw. das Verhältnis AZ von Illustrierten- zu Zeitungspapieren in der zur Altpapiersuspension verarbeiteten Menge an Altpapier. Beide Größen dienen als Steuergrößen zur Prozeßführung für die Regel- oder Steuereinrichtungen der Betriebsmittel der Anlage zur Herstellung von deinktem Zellstoff. Das dritte Teil-neuronale Netz NN3 des Zustandsanalysators in FIG 2c ist so ausgelegt, daß die Werte der mittleren Faserlänge FL und des Ascheanteiles AA in der Altpapiersuspension als Steuergrößen für die Prozeßführung ausgegeben werden. Schließlich ermittelt das vierte Teil-neuronale Netz NN4 in FIG 2d aus den obengenannten Eingangsgrößen einen Zählwert AS für den Anteil an Schmutz bzw. Schmutzpunkten und einen Zählwert AT für den Anteil an klebenden Verunreinigungen in der Altpapiersuspension. Die Teilnetze NN3 und NN4 sind somit vorteilhaft so ausgelegt, daß jeweils ein Paar von zueinandergehörigen Steuergrößen FL, AA bzw. AS, AT gebildet wird. Hierdurch wird auch das sogenannte Trainien der neuronalen Netze NN3, NN4 mit Hilfe von laboranalytisch gewonnenen Meßwerten erleichtert. So ist z.B. bei einer Bestimmung des Zählwertes AS für den Schmutz mit Hilfe einer Laboranalyse der verwandte Zählwert AT für den Anteil klebender Verunreinigungen auf leichte Weise mitbestimmbar.

Demgegenüber bilden die Teil-neuronalen Netze NN1 bzw. NN2 bevorzugt jeweils nur eine einzige Steuergröße AB bzw. AZ. Diese Werte können somit unabhängig voneinander sehr genau bestimmt werden. Dies ist vorteilhaft, da es sich bei den Verhältniswerten AB, AZ um wichtigt Hauptsteuergrößen für die Prozeßführung der Recyclinganlage handelt, welche häufig nicht gleichzeitig sondern nur alternativ eingesetzt werden. Durch die getrennte Bestimmung der Verhältniswerte mit Hilfe jeweils eines eigenen Teilnetzes besteht z.B. die Möglichkeit, im Einzelfall den jeweils plausibler erscheinenden Meßwert zur Prozeßführung einzusetzen.

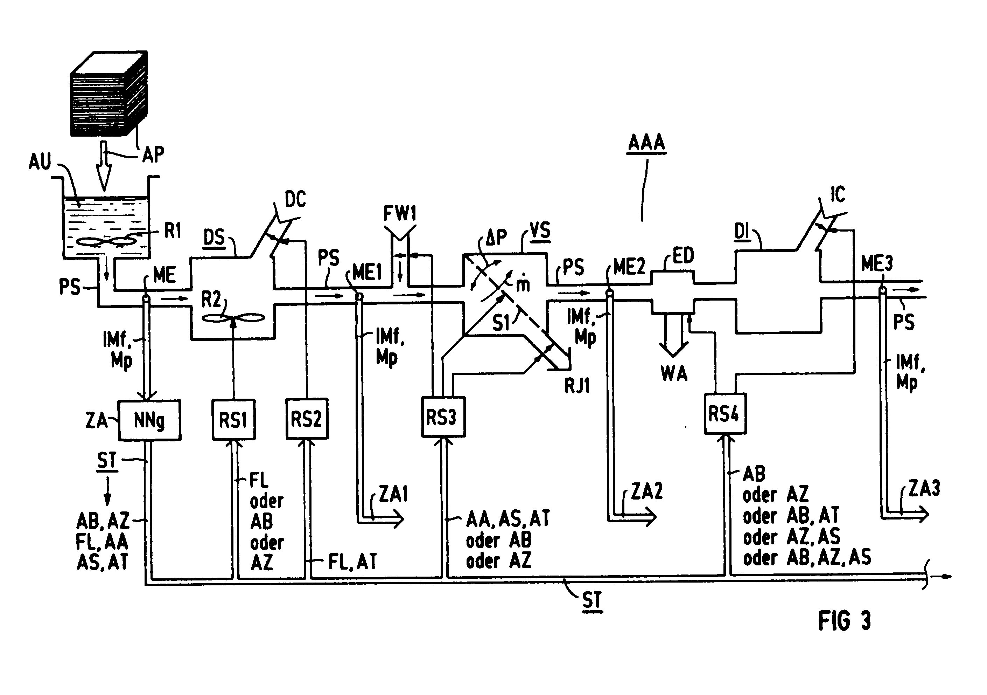

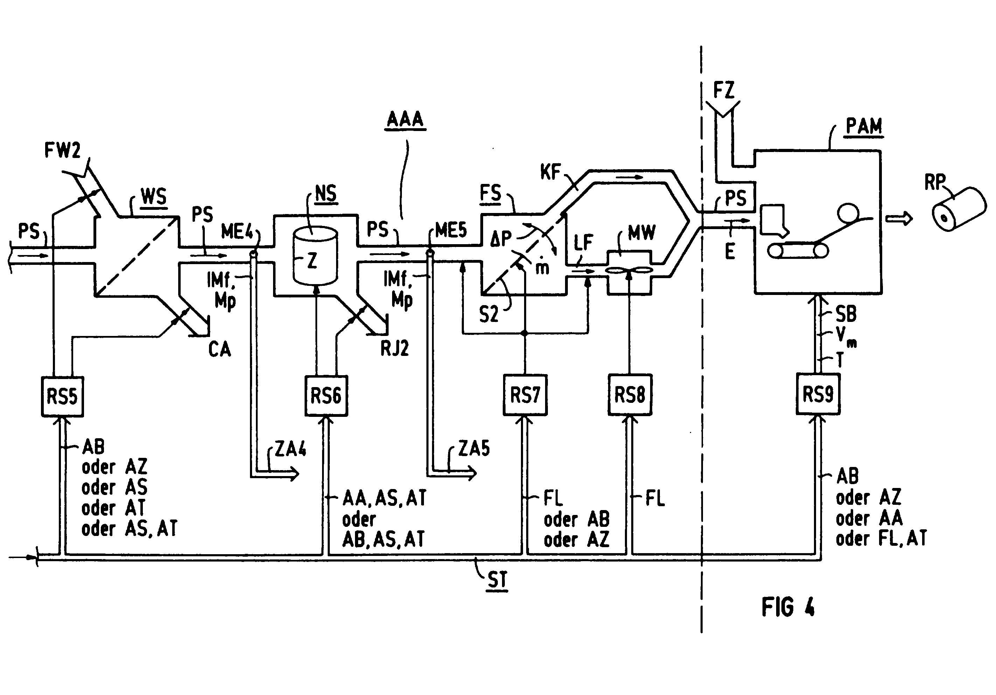

In den zusammengehörigen FIG 3 und 4 ist blockschaltbildmäßig eine Beispiel dargestellt für eine aus einer vorgelagerten Altpapieraufbereitung AAA und einer nachgeschalteten, den gebildeten deinkten Zellstoff unmittelbar verarbeitenden Papiermaschine PAM bestehenden Gesamtanlage zur Erzeugung von Recyclingpapier RP.

Am Eingang der Anlage befindet sich ein Auflöser AU, in den eingetragenes Altpapier AP mit Hilfe eines Rührwerkes R1 und entsprechender Frischwasserzugabe in eine Altpapiersuspension PS umgewandelt wird. Diese wird einem ersten Betriebsmittel der Aufbereitungsanlage zugeführt, welches in Form eines Defibrators DS mit Rührwerk R2 eine erste Homogenisierung der Fasern in der Altpapiersuspension bewirkt. Ferner können Dispergierchemikalien DC in den Defibrator oder in den Stoffstrom zugegeben werden, um die Auflösung von Faserklumpen zu beschleunigen.

Die derart behandelte Altpapiersuspension PS wird gegebenenfalls unter Zugabe von weiterem Frischwasser FW1 einem Vorsortierer VS als ein weiteres Betriebsmittel der Anlage zugeführt. Über ein Sieb S1 werden unbrauchbare Bestandteile der Altpapiersuspension in Form eines sogenannten Rejectes RJ1 abgesondert, während brauchbare Faserbestandteile das Sieb S1 passieren und zu weiteren Betriebsmitteln der Anlage gelangen.

Bei dem in FIG 3 dargestellten Beispiel wird die vorsortierte Altpapiersuspension PS zum Zwecke der Konsistenzeinstellung einem Eindicker ED zugeführt. Bei der Eindickung anfallendes Überschußwasser WA wird abgeleitet. Es schließt sich als ein wichtiges Betriebsmittel der Altpapieraufbereitung eine sogenannter Deinker DI an. Diesem werden zur chemischen Neutralisierung von Farbstoffen in der Altpapiersuspension Deinkingchemikalien IC zugegeben. Die derart aufbereitete Suspension PS wird daraufhin einem Wäscher WS als weiteres Betriebsmittel der Anlage zugeführt. Dieser ist auf der linken Seite der sich anschließenden FIG 4 dargestellt. Der Wäscher weist eine Frischwasserzuführung FW2 und eine Abwasser- bzw. Chemikalienabführung CA auf. Als ein weiteres Betriebsmittel kann sich ein Nachsortierer NS anschließen. In diesem werden mit Hilfe eines rotierenden Zylinders oder einer nicht dargestellten Batterie von Zyklonen Z weitere unbrauchbare Bestandteile der Altpapiersuspension PS abgetrennt und als Abfall RJ2 abgeführt.

Die Altpapiersuspension ist an dieser Stelle der Anlage AAA bereits hochgradig aufbereitet. Als eines der letzten Betriebsmittel folgt im Beispiel der FIG 4 ein Fasersortier FS. In diesem wird mit Hilfe eines Siebes S2 eine Trennung der Altpapiersuspension PS in zwei Stoffströme bewirkt. Der eine Strom KF enthält im wesentlichen kurze Zellstoffasern, welche unmittelbar zur Herstellung von Recyclingpapier geeignet sind. Der zweite Stoffstrom LF weist im wesentlichen lange Zellstoffasern auf, die zur Zerkleinerung einem Mahlwerk MW zugeführt werden. Anschließend werden die Stoffströme wieder zusammengefaßt. Die Altpapiersuspension PS hat an diesem Ende D der Altpapieraufbereitung AAA eine derartige Qualität erlangt, daß hieraus mittels einer nicht dargestellten Entwässerungsmaschine deinkter Zellstoff hergestellt werden kann. Im dargestellten Beispiel wird die Altpapiersuspension AP unmittelbar einer anschließenden Papiermaschine PAM zur Herstellung von Recyclingpapier RP zugeführt. Gegebenenfalls wird vorher ein geringer Anteil Frischzellstoff FZ zugegeben.

In der unteren Hälfte des Blockschaltbildes von FIG 3 und 4 sind beispielhafte Regel- oder Steuereinrichtungen RS1...RS9 zur Prozeßführung von Betriebsmitteln der Altpapieraufbereitung AAA, und beispielhafte Regel- oder Steuereinrichtungen zur Prozeßführung der sich anschließenden Papiermaschine PAM dargestellt. Eine mögliche Ausführungsform für die Bildung von Steuergrößen durch mindestens einen Zustandsanalysator ZA und deren mögliche Zuordnungen zu den Regel- oder Steuereinrichtungen der einzelnen Betriebsmittel werden des weiteren an Hand der Fig 3,4 näher erläutert.

So befindet sich am linken Rand des Blockschaltbildes der FIG 3 eine Meßeinrichtung ME, welche spektrale Kennwerte IMf und physikalische Kennwerte Mp der in dem Auflöser AU gebildeten Altpapiersuspension PS erfaßt. Die Kennwerte werden einem bevorzugt gemäß dem Ausführungsbeispiel von FIG 1 in Form eines einzigen Gesamt-neuronalen Netzes NNg ausgeführten Zustandsanalysator ZA als Eingangsgrößen zugeführt. Dieser bildet hieraus einen Satz von Steuergrößen ST, der bevorzugt die oben bereits erläuterten Werte AB, AZ, FL, AA, AS und AT umfaßt. Der Zustandanlaysator ZA kann auch in Form von mehreren parallelen Teil-neuronalen Netzen z.B. gemäß dem in den FIG 2a-2d dargestellten Beispiel ausgeführt sein.

Die Steuergrößen ST werden den einzelnen Regel- oder Steuereinrichtungen RS1...RS8,RS9 einzeln oder in ausgewählten Teilgruppen zum Zwecke der Prozeßführung der angeschlossenen Betriebsmittel zugeführt. So kann als Steuergröße für die Regel- oder Steuereinrichtung RS1, welche den als Betriebsmittel dienenden Rotor R2 im Defibrator DS ansteuert, bevorzugt der Wert der mittleren Faserlänge FL oder das Verhältnis AB von bunten zu weißen Papieren oder das Verhältnis AZ von Illustrierten- zu Zeitungspapieren dienen.

Die weitere Regel- oder Steuereinrichtung RS2 beeinflußt dasjenige Betriebsmittel der Altpapieraufbereitungsanlage AAA, welches Dispergierchemikalen DC in den Defibrator DS oder in die Stoffströme zudosiert. Als Steuergrößen ST für RS2 ist bevorzugt das Wertepaar aus der mittleren Faserlänge FL und dem Anteil AT klebender Verunreinigungen der Altpapiersuspension geeignet.

Die sich im Blockschaltbild der FIG 3 anschließende Regeloder Steuereinrichtung RS3 beeinflußt zum einen die Konsitenz der Altpapiersuspension PS durch Steuerung der Frischwasserzuführung FW1, und zum anderen das Sieb S1 im anschließenden Vorsortierer VS. Als Steuergrößen ST für RS3 eignet sich bevorzugt die aus dem Ascheanteil AA, dem Anteil AS an Schmutz und dem Anteil AT an klebenden Verunreinigungen in der Altpapiersuspension bestehende Wertegruppe. Alternativ dazu kann aber auch entweder das Verhältnis AB von bunten zu weißen Papieren oder das Verhältnis AZ von Illustrierten- zu Zeitungspapier in der Altpapiersuspension als Steuergröße für RS3 dienen.

Im Blockschaltbild der FIG 3 schließt sich die Regel- oder Steuereinrichtung RS4 an, welche den Eindicker ED und die zur Zugabe von Deinkingchemikalien IC in den Deinker DI dienenden Mittel beeinflußt. Aus Steuergröße ist das Verhältnis AB von bunten zu weißen Papieren oder das Verhältnis AZ von Illustrierten- zu Zeitungspapier in der Altpapiersuspension besonders geeignet. Alternativ dazu können auch Gruppen von Steuergrößen zur Prozeßführung dienen. So kann RS4 auch das Wertepaar aus dem Verhältnis AB von bunten zu weißen Papieren und dem Anteil AT an klebenden Verunreinigungen bzw. das Wertepaar aus dem Verhältnis AZ von Illustrierten- zu Zeitungspapier und dem Anteil AS an Schmutz in der Altpapiersuspension als Steuergrößen zugeführt werden. Schließlich eignet sich auch die aus dem Verhältnis AB von bunten zu weißen Papieren, dem Verhältnis AZ von Illustrierten- zu Zeitungspapieren und dem Anteil AS an Schmutz bestehende Gruppe von Steuergrößen zur Prozeßführung von RS4.

Es schließt sich auf der linken Seite von FIG 4 die Regeloder Steuereinrichtung RS5 an, welche eine Frischwasserzuführung FW2 und eine Chemikalienabführung CA am Wäscher WS für die Altpapiersuspension PS beeinflußt. Als Steuergröße für RS5 ist besonders geeignet das Verhältnis AB zu bunten zu weißen Papieren, oder das Verhältnis AZ von Illustrierten- zu Zeitungspapieren, oder der Anteil AS an Schmutz, oder Anteil AT an klebenden Verunreinigungen in der Altpapiersuspension. Alternativ kann auch die aus dem Anteil AS an Schmutz und dem Anteil AT an klebenden Verunreinigungen dienende Gruppe von Steuergrößen zur Prozeßführung von RS5 herangezogen werden.

Im Blockschaltbild der FIG 3,4 schließt sich nun die Regeloder Steuereinrichtung RS6 an, welche die Drehzahl eines Fliehkraftsortierers Z in der Nachsortiervorrichtung NS und die Abführung von Abfall RJ2 aus dieser beeinflußt. Die aus dem Ascheanteil AA, dem Anteil AS an Schmutz und dem Anteil AT an klebenden Verunreinigungen der Altpapiersuspension bestehende Gruppe an Steuergrößen ist besonders geeignet. Alternativ dazu kann auch die aus dem Verhältnis AB von bunten zu weißen Papieren, dem Anteil AS an Schmutz und dem Anteil AT an klebenden Verunreinigungen bestehende Gruppe von Steuergrößen ST zur Prozeßführung von RS6 dienen. In dieser Gruppe kann an Stelle von AP auch das Verhältnis AZ von Illustrierten- zu Zeitungspapier verwendet werden.

Die anschließende Regel- oder Steuereinrichtung RS7 beeinflußt die Wirkung des Siebes S2 im Fasersortierer FS bevorzugt durch Einstellung einer Druckdifferenz. Als Steuergrößen für RS7 ist der Wert der mittleren Faserlänge FL oder das Verhältnis AB von bunten zu weißen Papieren oder das Verhältnis AZ von Illustrierten- zu Zeitungspapieren geeignet.

Das als letztes Betriebsmittel der Altpapieraufbereitungsanlage AAA dienende Mahlwerk MW für die Langfasersuspension LF wird von der Regel- oder Steuereinrichtung RS8 beeinflußt. Als Steuergröße für RS8 eignet sich besonders der Wert FL der mittleren Faserlänge in der Altpapiersuspension PS.

Im Beispiel der FIG 4 schließt sich eine weitere Regel- oder Steuereinrichtung RS9 an, welche ausgewählte Betriebsmittel in der Papiermaschine PAM mit Hilfe von Steuergrößen ST beeinflußt, die vom Zustandsanalysator ZA mit dem neuronalen Netzes NNg aus der Altpapiersuspension PS abgeleitet sind.

Über RS9 kann gesteuert werden z.B. das Verhältnis SB von Sieb- zu Strahlgeschwindigkeit, d.h. der Grad des Auftrages von Suspension auf das Sieb der Papiermaschine. Desweiteren kann die Geschwindigkeit Vm der Papiermaschine PAM und damit die Produktionsgeschwindigkeit für Recyclingpapier RP beeinflußt werden. Als weitere Prozeßgröße in der Papiermaschine kann die Papiertrocknung durch Führung der Heiztemperatur T der Trockenzylinder gesteuert werden. Hierzu werden der Regel- oder Steuereinrichtung RS9 wiederum Steuergrößen ST einzeln oder in Gruppen zugeführt. Besonders geeignet sind das Verhältnis AB von bunten zu weißen Papieren, oder das Verhältnis AZ von Illustrierten- zu Zeitungspapieren, oder der Anteil AA an Asche in der Altpapiersuspension, oder die aus der mittleren Faserlänge FL und dem Anteil AT an klebenden Verunreinigungen bestehende Gruppe an Steuergrößen ST.

Bei einer weiteren Ausführungsform der Erfindung sind weitere Meßeinrichtungen im Inneren der Altpapieraufbereitungsanlage AAA angeordnet. So sind im Blockschaltbild der FIG 3,4 weitere Meßeinrichtungen ME1 im Anschluß an den Defibrator DS, ME2 im Anschluß an den Vorsortierer VS, ME3 im Anschluß an den Deinker DI, ME4 im Anschluß an den Wäscher WS und ME5 im Anschluß an den Nachsortierer NS beispielhaft dargestellt. Alle Meßeinrichtungen bilden möglichst die gleiche Gruppe an spektralen und physikalischen Kennwerten IMf, Mp aus der Altpapiersuspension PS. Da die Meßeinrichtung ME1...ME5 an unterschiedlichen Stellen in der Altpapieraufbereitungsanlage angeordnet sind, sind die hiermit erfaßten Kennwerte aufgrund der zunehmenden Reinheit der Altpapiersuspension PS abweichend.

Vorteilhaft werden die auf diese Art erfaßten Kennwerte zur Bildung von Steuergrößen herangezogen, mit denen die im Prozeßablauf nachfolgenden Betriebsmittel zumindest in der Altpapieraufbereitung beeinflußt werden. So werden die von der Meßeinrichtung ME1 erfaßten Kennwerte IMf,Mp einem weiteren, wiederum in Form von mindestens einem neuronalen Netz aufgebauten Zustandsanalysator ZA1 zugeführt. Dieser bildet hieraus wiederum Steuergrößen ST mit den Werten AB, AZ, FL, AA, AS ,AT. Da diese Werte den tatsächlichen Zustand der Altpapiersuspension PS am Ausgang des Defibrators DS genauer abbilden, werden diese vorteilhaft als Steuergrößen zur Prozeßführung an nachfolgende Steuer- und Regeleinrichtungen weitergegeben, im Beispiel der FIG 3,4 an die Regel- und Steuereinrichtungen RS3...RS9.

In der gleichen Weise können die von möglicherweise vorhandenen weiteren Meßeinrichtungen ME2...ME5 erfaßten spektralen und physikalischen Kennwerte IMf, Mp weiteren, wiederum in Form von neuronalen Netzen aufgebauten Zustandanalysatoren ZA2...ZA5 zugeführt werden. Jeder von diesen stellt einen eigenen Satz an Steuergrößen ST zur Verfügung, welcher zur Prozeßführung an die Regel- oder Steuereinrichtungen RS4...RS9 nachfolgender Betriebsmittel in der Altpapieraufbereitung AAA und gegebenenfalls einer Papiermaschine PAM in einer Recyclingpapieranlage weitergegeben wird.

## Patentansprüche

1. Vorrichtung zum Betrieb einer Anlage zur Erzeugung von deinktem Zellstoff (RP), welche zumindest eine Altpapieraufbereitung (AAA) enthält, der eine Entwässerungsmaschine oder mindestens eine Papiermaschine (PAM) nachgeschaltet ist, mit
a) mindestens einer Meßeinrichtung (ME) zur Erfassung spektraler und/oder physikalischer (IMf,Mp) Kennwerte einer Altpapiersuspension (PS), die der Altpapieraufbereitung (AAA) zugeführt wird bzw. diese durchläuft,
b) Regel- oder Steuereinrichtungen (RS1...RS8) für Betriebsmittel (DS,DC,FW1,VS,RJ1,ED,DI,IC,FW2,WS,CA,NS, RJ2,FS,MW) der Altpapieraufbereitung (AAA), und mit
c) mindestens einem, in Form eines (NNg) oder mehrerer paralleler (NN1 ...NN4) neuronaler Netze ausgeführten Zustandsanalysator (ZA) für die Altpapiersuspension (PS), welcher mittels der Kennwerte (IMf,Mp) der mindestens einen Meßeinrichtung (ME) Steuergrößen (ST:AB,AZ,FL,AA, AS,AT) zur Prozeßführung an Regel- oder Steuereinrichtungen (RS1...RS8) von Betriebsmitteln (DS,DC,FW1,VS, RJ1,ED,DI,IC,FW2,WS,CA,NS,RJ2,FS,MW) zumindest der Altpapieraufbereitung (AAA) ausgibt.

2. Vorrichtung nach einem der vorangegangenen Ansprüche, wobei von einem gemeinsamen neuronalen Netz (NNg) oder getrennt von mehreren parallelen neuronalen Netzen (NN1,NN2) in dem mindestens einen Zustandsanalysator als Steuergrößen (ST) für die Prozeßführung ermittelt werden
a) das Verhältnis (AB) von bunten Papieren zu weißen Papieren, und/oder
b) das Verhältnis (AZ) von Illustriertenpapier zu Zeitungspapier
in der zur Altpapiersuspension (PS) verarbeiteten Menge an Altpapier (AP).

3. Vorrichtung nach einem der vorangegangenen Ansprüche, wobei von einem gemeinsamen neuronalen Netz (NNg) oder getrennt von mehreren parallelen neuronalen Netzen (NN1,NN2) in dem mindestens einen Zustandsanalysator als Steuergrößen (ST) für die Prozeßführung ermittelt werden
a) die mittlere Faserlänge (FL), und/oder
b) der Ascheanteil (AA)
in der Altpapiersuspension (PS).

4. Vorrichtung nach einem der vorangegangenen Ansprüche, wobei von einem gemeinsamen neuronalen Netz (NNg) oder getrennt von mehreren parallelen neuronalen Netzen (NN1,NN2) in dem mindestens einen Zustandsanalysator als Steuergrößen (ST) für die Prozeßführung ermittelt werden ein Zählwert
a) für den Anteil von Schmutz (AS), und/oder
b) für den Anteil klebender Verunreinigungen (AT)
in der Altpapiersuspension (PS).

5. Vorrichtung nach einem der vorangegangenen Ansprüche, wobei als spektrale Kennwerte (IMf) die bei einer Bestrahlung mit ausgewählten Wellenlängenbereichen des sichtbaren und/oder infraroten Lichtes von der Altpapiersuspension (PS) reflektierten und/oder transmittierten Intensitäten dieser Wellenlängenbereiche erfaßt werden.

6. Vorrichtung nach Anspruch 5, wobei für das sichtbare Licht die zum blauen, roten und/oder grünen Lichtanteil gehörenden Wellenlängenbereiche ausgewählt werden, und die bei Bestrahlung mit Licht dieser Wellenlängenbereiche von der Altpapiersuspension (PS) reflektierten und/oder transmittierten Intensitäten (WL-blau, WL-rot, WL-grün) als spektrale Kennwerte (IMf) gemessen werden.

7. Vorrichtung nach Anspruch 5, wobei bei Bestrahlung mit Licht aus dem infraroten Wellenlängenbereich die von der Altpapiersuspension (PS) reflektierten und/oder transmittierten Intensitäten im Nahbereich (WL-IRnah) und/oder im Fernbereich (WL-IRfern) als spektrale Kennwerte (IMf) gemessen werden.

8. Vorrichtung nach einem der vorangegangenen Ansprüche, wobei als physikalische Kennwerte (Mp) die Konsistenz (K) und/oder Temperatur (T) der Altpapiersuspension (PS) erfaßt werden.

9. Vorrichtung nach einem der vorangegangenen Ansprüche, mit
a) Regel- oder Steuereinrichtungen (RS9) für Betriebsmittel (ST,Vm,T) mindestens einer nachgeschalteten Papiermaschine (PAM), an die
b) der in Form eines (NNg) oder mehrerer paralleler (NN1... NN4) neuronaler Netze ausgeführte, mindestens eine Zustandsanalysator (ZA) Steuergrößen (ST:AB,AZ,FL, AA,AS,AT) zur Prozeßführung ausgibt.

10. Vorrichtung nach einem der vorangegangenen Ansprüche, mit mindestens einer weiteren, in der Altpapieraufbereitung (AAA) angeordneten Meßeinrichtung (ME1,ME2,ME3, ME4,ME5) zur Erfassung spektraler (IMf) und/oder physikalischer (Mp) Kennwerte aus der Altpapiersuspension (PS), der mindestens ein weiterer, in Form eines (NNg) oder mehrerer paralleler (NN1... NN4) neuronaler Netze ausgeführter Zustandsanalysator (ZA1,ZA2,ZA3,ZA4,ZA5) nachgeschaltet ist, welcher die Steuergrößen (ST:AB,AZ,FL,AA,AS,AT) zur Prozeßführung an die Regel- oder Steuereinrichtungen (...RS9) nachfolgender Betriebsmittel (...VS,RJ1,ED,DI,IC,FW2,WS,CA,NS,RJ2,FS,MW) zumindest in der Altpapieraufbereitung (AAA) ausgibt.

## Claims

1. Apparatus for the operation of a plant for producing deinked pulp (RP), which includes at least a waste paper preparation (AAA), arranged downstream of which is a dewatering machine or at least one paper machine (PAM), with
a) at least one measuring device (ME) for recording spectral and/or physical (IMf, Mp) characteristic values of a waste paper suspension (PS), which is fed to the waste paper preparation (AAA) or runs through the latter,
b) closed-loop or open-loop control devices (RS1,..RS8) for operating means (DS, DC, FW1, VS, RJ1, ED, DI, IC, FW2, WS, CA, NS, RJ2, FS, MW) of the waste paper preparation (AAA), and with
c) at least one state analyser (ZA), configured in the form of a neural network (NNg) or a plurality of parallel neural networks (NN1...NN4), for the waste paper suspension (PS), which analyser outputs, by means of the characteristic values (IMf, MP) of the at least one measuring device (Me), controlled variables (ST: AB, AZ, FL, AA, AS, AT) for process control to closed-loop or open-loop control devices (RS1...RS8) of operating means (DS, DC, FW1, VS, RJ1, ED, DI, IC, FW2, WS, CA, NS, RJ2, FS, MW) at least of the waste paper preparation (AAA).

2. Apparatus according to one of the preceding claims, the following being determined as controlled v riables (ST) for process control by a common neural network (NNg) or separately by a plurality of parallel neural networks (NN1, NN2) in the at least one state analyser:
a) the ratio (AB) of coloured papers to white papers, and/or
b) the ratio (AZ) of illustrated-magazine paper to newsprint paper
in the amount of waste paper (AP) processed to form the waste paper suspension (PS).

3. Apparatus according to one of the preceding claims, the following being determined as controlled variables (ST) for process control by a common neural network (NNg) or separately by a plurality of parallel neural networks (NN1, NN2) in the at least one state analyser:
a) the average fibre length (FL), and/or
b) the ash content (AA)
in the waste paper suspension (PS).

4. Apparatus according to one of the preceding claims, a count value for the following being determined as controlled variables (ST) for process control by a common neural network (NNg) or separately by a plurality of parallel neural networks (NN1, NN2) in the at least one state analyser:
a) for the content of dirt (AS), and/or
b) for the content of adhesive contaminants (AT)
in the waste paper suspension (PS).

5. Apparatus according to one of the preceding claims, the intensities of the respective wavelength ranges reflected and/or transmitted by the waste paper suspension (PS) under irradiation at selected wavelength ranges of visible and/or infrared light being recorded as spectral characteristic values (IMf).

6. Apparatus according to Claim 5, the wavelength ranges belonging to the blue, red and/or green component of light being selected for the visible light, and the intensities (WL-blue, WL-red, WL-green) reflected and/or transmitted by the waste paper suspension (PS) under irradiation with light of these wavelength ranges being measured as spectral characteristic values (IMf).

7. Apparatus according to Claim 5, the intensities in the near range (WL-IR near) and/or in the far range (WL-IR far) reflected and/or transmitted by the waste paper suspension (PS) under irradiation with light from the infrared wavelength range being measured as spectral characteristic values (IMf).

8. Apparatus according to one of the preceding claims, the consistency (K) and/or temperature (T) of the waste paper suspension (PS) being recorded as physical characteristic values (Mp).

9. Apparatus according to one of the preceding claims, with
a) closed-loop or open-loop control devices (RS9) for operating means (ST, Vm, T) of at least one downstream paper machine (PAM), to which devices
b) the at least one state analyser (ZA), configured in the form of a neural network (NNg) or a plurality of parallel neural networks (NN1...NN4), outputs controlled variables (ST: AB, AZ, FL, AA, AS, AT) for process control.

10. Apparatus according to one of the preceding claims, with at least one further measuring device (ME1, ME2, ME3, ME4, ME5) arranged in the waste paper preparation (AAA), for recording spectral characteristic values (IMf) and/or physical characteristic values (Mp) from the waste paper suspension (PS), downstream of which device there is arranged at least one further state analyser (ZA1, ZA2, ZA3, ZA4, ZA5), configured in the form of a neural network (NNg) or a plurality of parallel neural networks (NN1...NN4), which analyser outputs the controlled variables (ST: AB, AZ, FL, AA, AS, AT) for process control to the closed-loop or open-loop control devices (...RS9) of downstream operating means (...VS, RJ1, ED, DI, IC, FW2, WS, CA, NS, RJ2, FS, MW) at least in the waste paper preparation (AAA).

## Revendications

1. Dispositif pour faire fonctionner une installation de production de pâte (RP) de cellulose désencrée, qui comprend au moins un dispositif (AAA) de préparation de papier de récupération, en aval duquel est branchée une machine de dessiccation ou au moins un machine (PAM) à papier, comportant
a) au moins un dispositif (ME) de mesure destiné à la détection de valeurs caractéristiques spectrales et/ou physiques (IMf, Mp) d'une suspension (PS) de papier de récupération, qui est amenée au dispositif (AAA) de préparation de papier de récupération ou qui traverse celui-ci,
b) des dispositifs (RS1 à RS8) de réglage et de commande de moyens de production (DS, DC, FW1, VS, RJ1, ED, DI, IC, FW2, WS, CA, NS, RJ2, FS, MW) du dispositif (AAA) de préparation de papier de récupération et
c) au moins un analyseur (ZA) d'état réalisé sous forme d'un (NNg) ou de plusieurs (NN1 à NN4) réseaux neuronaux parallèles, pour la suspension (PS) de papier de récupération, lequel analyseur fournit, au moyen des valeurs caractéristiques (IMf, Mp) du au moins un dispositif (ME) de mesure, des grandeurs de commande (ST: AB, AZ, FL, AA, AS, AT) pour la conduite du processus à des dispositifs (RS1 à RS8) de réglage et de commande de moyens de production (DS, DC, FW1, VS, RJ1, BD, DI, IC, FW2, WS, CA, NS, RJ2, FS, MW) au moins du dispositif (AAA) de préparation de papier recyclé.

2. Dispositif suivant l'une des revendications précédentes, dans lequel
a) le rapport (AB) de papier multicolore au papier blanc, et/ou
b) le rapport (AZ) de papier illustré au papier journal
est déterminé, parmi la quantité de papier (AP) de récupération traitée en suspension (PS) de papier de récupération, par un réseau (NNg) neuronal commun ou séparément par plusieurs réseaux neuronaux parallèles (NN1, NN2) dans le au moins un analyseur d'état en tant que grandeurs (ST) de commande pour la conduite du processus.

3. Dispositif suivant l'une des revendications précédentes, dans lequel
a) la longueur moyenne (FL) des fibres et/ou
b) la proportion (AA) de cendre
dans la suspension (PS) de papier de récupération est déterminée par un réseau neuronal commun (NNg) ou séparément par plusieurs réseaux neuronaux parallèles (NN1, NN2) dans le au moins un analyseur d'état en tant que grandeurs (ST) de commande pour la conduite du processus.

4. Dispositif suivant l'une des revendications précédentes, dans lequel une valeur de comptage
a) pour la proportion de détritus (AS) et/ou
b) pour la proportion d'impuretés collantes (AT)
dans la suspension (PS) de papier de récupération sont déterminées par un réseau neuronal commun (NNg) ou séparément par plusieurs réseaux neuronaux parallèles (NN1, NN2) dans le au moins un analyseur d'état en tant que grandeurs (ST) de commande pour la conduite du processus.

5. Dispositif suivant l'une des revendications précédentes, dans lequel on détecte comme grandeurs caractéristiques spectrales (IMf), les intensités réfléchies et/ou transmises, dans des domaines de longueurs d'ondes sélectionnés de la lumière visible et/ou infra-rouge, par la suspension (PS) de papier de récupération, lorsqu'on l'expose à ces domaines sélectionnés de longueurs d'ondes.

6. Dispositif suivant la revendication 5, dans lequel les domaines de longueurs d'ondes correspondant à la composante bleue, rouge et/ou verte de la lumière sont sélectionnés pour la lumière visible et les intensités (WLbleu, WL-rouge, WL-vert) réfléchies et/ou transmises par la suspension (PS) de papier de récupération lorsqu'on l'expose à de la lumière dans ces domaines de longueurs d'ondes sont mesurées comme grandeurs caractéristiques spectrales (IMf).

7. Dispositif suivant la revendication 5, dans lequel lors de l'exposition à de la lumière du domaine de longueurs d'ondes infra-rouges, les intensités réfléchies et/ou transmises par la suspension (PS) de papier de récupération sont mesurées dans le domaine proche (WL-IR proche) et/ou dans le domaine lointain (WL-IR lointain) en tant que valeurs caractéristiques spectrales (IMf).

8. Dispositif suivant l'une des revendications précédentes, dans lequel on détecte comme valeurs caractéristiques (Mp) physiques la consistance (K) et/ou la température (T) de la suspension (PS) de papier de récupération.

9. Dispositif suivant l'une des revendications précédentes, comportant
a) des dispositifs (RS9) de réglage ou de commande de moyens (ST, Vm, T) de production d'au moins une machine (PAM) à papier branchée en aval, à laquelle
b) le au moins un analyseur (ZA) d'état réalisé sous forme d'un (NNg) ou de plusieurs (NN1 à NN4) réseaux neuronaux fournit des grandeurs de commande (ST:AB, AZ, FL, AA, AS, AT) pour la conduite du processus.

10. Dispositif suivant l'une des revendications précédentes, comportant au moins un dispositif de mesure (ME1, ME2, ME3, ME4, ME5) supplémentaire, qui est monté dans le dispositif (AAA) de préparation de papier de récupération, qui est destiné à détecter des valeurs caractéristiques spectrales (IMf) et/ou physiques (Mp) de la suspension (PS) de papier de récupération et en aval duquel est branché au moins un analyseur supplémentaire (ZA1, ZA2, ZA3, ZA4, ZA5) d'état réalisé sous forme d'un (NNg) ou de plusieurs (NN1 à NN4) réseaux neuronaux, lequel analyseur supplémentaire foumit les grandeurs de commande (ST:AB, AZ, FL, AA, AS, AT) pour la conduite du processus aux dispositifs (...RS9) de réglage ou de commande de moyens de production à la suite (... VS, - RJ1, ED, DI, IC, FW2, WS, CA, NS, RJ2, FS, MW) au moins dans le dispositif (AAA) de préparation de papier de récupération.
